# EUROPÄISCHE PATENTANMELDUNG

(11) **EP 1 857 971 A1**
(43) Veröffentlichungstag der Anmeldung: **21.11.2007**
(21) Anmeldenummer: 06009992.6
(22) Anmeldetag: 15.05.2006
(51) Int. Cl.: G06Q 20/00

(54) **Verfahren zur Zahlungsabwicklung, Rechnungsvordruck zur Zahlungsabwicklung, Rechnungsvordruckerzeugungseinrichtung sowie Einrichtung zur Kommunikation mit einem Geldinstitut**

(71) Anmelder: SIEMENS AKTIENGESELLSCHAFT, 80333 München (DE)
(72) Erfinder: Moser, Markus, 8055 Graz (AT); Pelzmann, Martin, 8052 Graz (AT)

(57) **Zusammenfassung**

Die Erfindung betrifft ein Verfahren zur Zahlungsabwicklung, bei dem durch eine eine Rechnung stellende Entität ein an einen Rechnungsschuldner zu übermittelnder Zahlungsvordruck erstellt wird, wobei zur Abwicklung.der Zahlung erforderliche Daten seitens der ausstellenden Entität auf den Vordruck aufgetragen werden, wird dem Zahlungsvordruck eine erste Kurzstrecken-Funksende-Funkempfangseinrichtung mit einer Speichereinrichtung integriert. Ferner werden die erforderlichen Daten auf der Speichereinrichtung derart dauerhaft gespeichert, dass sie bei Aufenthalt des Vordrucks im Kurzstrecken-Funksende-/Funkempfangsbereich (Funkversorgungsbereich) einer mit einer zweiten Kurzstrecken-Funksende-Funkempfangseinrichtung ausgebildeten mit einem Geldinstitut kommunizierenden Einrichtung nach Detektion einer ersten initiierenden Aktion die gespeicherten Daten übertragen. Ferner betrifft die Erfindung eine Rechnungsvordruckerzeugungseinrichtung, einen Rechnungsvordruck sowie eine Einrichtung zur Kommunikation mit einem Geldinstitut, welche zur Durchführung des Verfahrens ausgestaltet sind.

## Beschreibung

Die Erfindung betrifft ein Verfahren zur Zahlungsabwicklung gemäß dem Gattungsbegriff des Anspruchs 1 sowie eine Rechnungsvordruckerzeugungseinrichtung gemäß dem Gattungsbegriff des Anspruchs 10, einen Rechnungsvordruck gemäß dem Gattungsbegriff des Anspruchs 11 sowie eine Einrichtung zur Kommunikation mit einem Geldinstitut gemäß dem Gattungsbegriff des Anspruchs 14.

Durch die Entwicklung des Internets ist die Abwicklung von Geschäften über dieses Medium insbesondere das Erledigen von Zahlungen über so genanntes Electronic oder Online Banking einer breiten Masse zugänglich geworden. Neben dieser Möglichkeit, seine Zahlungsaufträge abzuwickeln, besteht nach wie vor die Möglichkeit, an mit den Banken verbundenen Terminals der Geldinstitute, auch als Bankomaten bekannt, für die Abwicklung von Geschäften in Verbindung mit der Bank, wie beispielsweise dem Abheben von Geld, dem Überprüfen von Kontostandsinformationen sowie ebenfalls die Abwicklung von Zahlungen durchzuführen.

Nachteilig bei dieser Art von Zahlungsabwicklungen ist es, dass die oftmals von Unternehmen ausgestellten Rechnungen gemeinsam mit einem bereits ausgefüllten im Zahlungsverkehr üblichen Zahlungsvordruck an den jeweiligen Schuldner übermittelt werden und diese Daten, soweit die Zahlung nicht an einem Bankschalter erfolgt, in die genannten Systeme, d.h. Bankomat oder Online bzw. Internet Banking über Eingabemasken oder spezielle Programme eingegeben werden müssen. Dies ist zum einen zeitaufwendig und zum anderen zudem noch anfällig für Fehler.

Die der Erfindung zugrunde liegende Aufgabe besteht darin, ein dem gegenüber verbessertes Verfahren sowie hierzu notwendigen Einrichtungen anzugeben.

Diese Aufgabe wird ausgehend von dem gattungsgemäßen Verfahren nach Anspruch 1 durch dessen kennzeichnende Merkmale gelöst. Ferner löst die Aufgabe die Rechnungsvordruckerzeugungseinrichtung gemäß dem Anspruch 1 durch seine kennzeichnenden Merkmale. Zudem wird die Aufgabe durch den Rechnungsvordruck nach Anspruch 11 sowie der Einrichtung zur Kommunikation mit einem Geldinstitut gemäß Anspruch 14 jeweils durch deren kennzeichnenden Merkmale gelöst.

Bei dem erfindungsgemäßen Verfahren zur Zahlungsabwicklung, bei dem durch eine eine Rechnung stellende Entität ein an einen Rechnungsschuldner zu übermittelnder Zahlungsvordruck erstellt wird, wobei zur Abwicklung der Zahlung erforderliche Daten seitens der ausstellenden Entität auf den Vordruck aufgetragen werden, wird dem Zahlungsvordruck eine erste Kurzstrecken-Funksende-Funkempfangseinrichtung mit einer Speichereinrichtung integriert. Ferner werden die erforderlichen Daten auf der Speichereinrichtung derart dauerhaft gespeichert, dass sie bei Aufenthalt des Vordrucks im Kurzstrecken-Funksende-/Funkempfangsbereich (Funkversorgungsbereich) einer mit einer zweiten Kurzstrecken-Funksende-Funkempfangseinrichtung ausgebildeten mit einem Geldinstitut kommunizierenden Einrichtung nach Detektion einer ersten initiierenden Aktion die gespeicherten Daten übertragen.

Vorteil dieses erfindungsgemäßen Verfahrens ist, dass eine Zahlungsabwicklung über Internet Banking bzw. Bankomaten (Tipp-)fehlerfrei und zeitsparend durchgeführt wird. Dabei ermöglicht der Einsatz von Kurzstrecken-Funksende-Funkempfangseinrichtungen, dass sich der Nutzer in einem Nahfeld dieser Zahlungsabwicklungseinrichtungen befinden muss, so dass ein zufälliges Auslösen der Zahlung vermieden wird und zudem der Angriff seitens eines unberechtigten Dritten, mit dem Ziel, die Daten abzufangen bzw. durch Beobachtung beispielsweise der Terminals zu kontorelevanten Daten zu gelangen, vermieden wird, da der Nutzer sich nach wie vor, wie üblich, vorzugsweise vor dem Display des Gerätes befinden muss, damit er detektiert wird und der Dritte sich ebenfalls in dem Nahfeld bewegen müsste und somit sichtbar wäre. Da ein üblicher Zahlungsvordruck verwendet wird, in dem lediglich eine erfindungsgemäße Kurzstrecken-Funksende-Funkempfangseinrichtung integriert wird, kann dieser Vordruck zudem nach wie vor gleichzeitig alternativ für übliche Zahlungsvorgänge an Schaltern von Geldinstituten genutzt werden.

Bevorzugt wird dabei gemäß einer Weiterbildung des Verfahrens die Initiierung durch den Eintritt ins Nahfeld ausgelöst. Dies hat den Vorteil, dass der Zahlungsvorgang insgesamt von Zeit verbrauchenden Aktionen befreit wird. Zudem hat dies auch einen Sicherheitsaspekt, da der Nutzer das Formular nicht aus seinem Behältnis herausnehmen muss, so dass ein unberechtigter Dritter nicht zu Daten oder gar dem Formular selbst Zugang erhält.

Alternativ oder ergänzend erfolgt dabei die Initiierung durch eine Nutzerangabe an der mit dem Geldinstitut kommunizierenden Einrichtung und/oder am Vordruck selbst, wobei bevorzugt nach der Übertragung der Daten diese automatisch in einer seitens der Einrichtung bereitgestellten Eingabemaske eingetragen werden. Vorteil dieser Ausbildungen ist dabei, dass der Nutzer noch eine Kontrollmöglichkeit hat und den Zahlungsvorgang gegebenenfalls abbrechen kann. Dies wird insbesondere dann zum Tragen kommen, wenn vermieden werden soll, dass die Überweisung mehrfach ausgelöst wird, allein dadurch, dass der Nutzer zufällig öfters an einer derartigen Einrichtung vorbeiläuft und das Nahfeld der Kurzstrecken-Funksende-Funkempfangseinrichtung beispielsweise nicht hinreichend klein genug ist, so dass jedes Vorbeigehen auch eine Zahlung auslösen würde.

Eine weitere vorteilhafte Ausgestaltung des Verfahrens besteht darin, dass biometrische Daten des Nutzers insbesondere Fingerabdrücke erfasst werden, diese Daten des Nutzers mit gespeicherten biometrischen Nutzerdaten verglichen werden und bei einer Übereinstimmung mit den gespeicherten Daten die Zahlungsabwicklung zur Verarbeitung an das Geldinstitut weitergeleitet wird. Vorteil dieser Verfahrensweise liegt in der erhöhten Absicherung gegen den Missbrauch durch Dritte.

Bevorzugt wird dabei die Einrichtung als ein mit einem Bank-Kommunikationsnetz kommunizierender Bankautomat betrieben bzw. alternativ oder ergänzend als ein über ein Kommunikationsnetz, insbesondere mit dem Internet verbundener Rechner, so dass für einen Nutzer keine Umstellung auf neue Verfahrensweisen erforderlich sind und somit die Akzeptanz nutzerseitig gesteigert wird.

Bei einer weiteren Fortbildung des erfindungsgemäßen Verfahrens werden neben den erforderlichen Daten weitere durch die Entität auf das Speichermedium gesicherte Daten an die Einrichtung übertragen und zur Darstellung zur Anzeige gebracht, so dass ein Nutzer sie lesen kann und dieses Lesen bestätigen muss. Vorteil dieser Vorgehensweise ist, dass dem Nutzer zum einen rechtliche Informationen bzw. Hinweise gegeben werden können und/oder Informationen seitens der ausstellenden Entität beispielsweise mit neuen Angeboten etc. dem Kunden nahe gelegt werden, so dass hierdurch auch möglicherweise durch die Integrierung der Kurzstrecken-Funksende-Funkempfangseinrichtung in den Zahlungsvordruck entstehenden Mehrkosten durch diese Werbemaßnahmen refinanziert werden. Bevorzugt wird der Zahlungsvordruck als von Geldinstituten akzeptiertes Formular erstellt, so dass auch seitens des Geldinstitutes keine Anpassungen erforderlich sind und die Akzeptanz des erfindungsgemäßen Verfahrens auch von seiten der Geldinstitute gesteigert wird.

Die Aufgabe wird auch durch eine Rechnungsvordruckerzeugungseinrichtung zur Zahlungsabwicklung gelöst, welche sich durch Mittel zur Erzeugung eines Rechnungsvordrucks, wie er für das Verfahren benötigt wird, auszeichnet.

Des Weiteren wird die Aufgabe durch einen Rechnungsvordruck gelöst, welcher gemäß dem Verfahren eingesetzt wird.

Dabei wird bevorzugt die erste Kurzstrecken-Funksende-Funkempfangseinrichtung als so genannter *"*Radio Frequency Identification"-(RFID-)Chip ausgestaltet. Vorteilhaft ist dabei, dass diese Chips zum einen in sehr großer Stückzahl gefertigt werden und somit in der Anschaffung günstig sind. Des Weiteren weisen sie einen kleinen Informationsspeicher auf, der zur Unterstützung des erfindungsgemäßen Verfahrens vollkommen ausreicht und zudem ist er in seiner Dimension derart klein ausgestaltet, dass eine Integration in bekannte Zahlungsvordrucke weitestgehend problemlos möglich ist. Bevorzugt ist dabei der Funkversorgungsbereich derart ausgestaltet, dass er insbesondere durch Begrenzung der Sendeleistung das Nahfeld bestimmt. Vorteil dieser Ausführung ist, dass bereits die eingesetzte erste Kurzstrecken-Funksende-Funkempfangseinrichtung zur Sicherung des Zahlungsvorgangs beiträgt, in dem es den Radius des Funkversorgungsbereiches (Funksende-/Funkempfangsbereiches) auf ein Minimum reduziert und somit Missbrauch und ungewollte Zahlungsauslösungen vermeidet. Diese Weiterbildung wird dabei bevorzugt dann eingesetzt, wenn andere Kurzstrecken-Funksende-Funkempfangseinrichtungen als die genannten RFID-Chips eingesetzt werden, da diese im Vergleich zu den RFID-Chips in der Regel einen größeren Funksende-Funkempfangsversorgungsbereich aufweisen.

Die Aufgabe wird ferner durch eine Einrichtung zur Kommunikation mit einem Geldinstitut, insbesondere einem Bankomaten, gelöst, welcher Mittel zur Durchführung des Verfahrens aufweist. Dieser wird dabei bevorzugt eine zweite Kurzstrecken-Funksende-Funkempfangseinrichtung aufweisen, die derart ausgestaltet ist, dass ihr Funkversorgungsbereich insbesondere durch Begrenzung der Sendeleistung das Nahfeld bestimmt. Auch hierdurch kann gesichert werden, dass ungewollte Zahlungen nicht erfolgen bzw. Angriffsmöglichkeiten seitens Dritter reduziert werden. Des Weiteren weist dies den Vorteil auf, dass an wenigen zentralen Stellen eine Reduzierung von Funkversorgungsbereichen erfolgen muss und somit bei der Integration von ersten Kurzstrecken-Funksende-Funkempfangseinrichtungen auf unveränderte auf dem Markt verfügbare Produkte zugegriffen werden kann, so dass hierdurch ein günstiger Einkauf möglich ist, was zu einer größeren Akzeptanz bei den ausstellenden Entitäten führt.

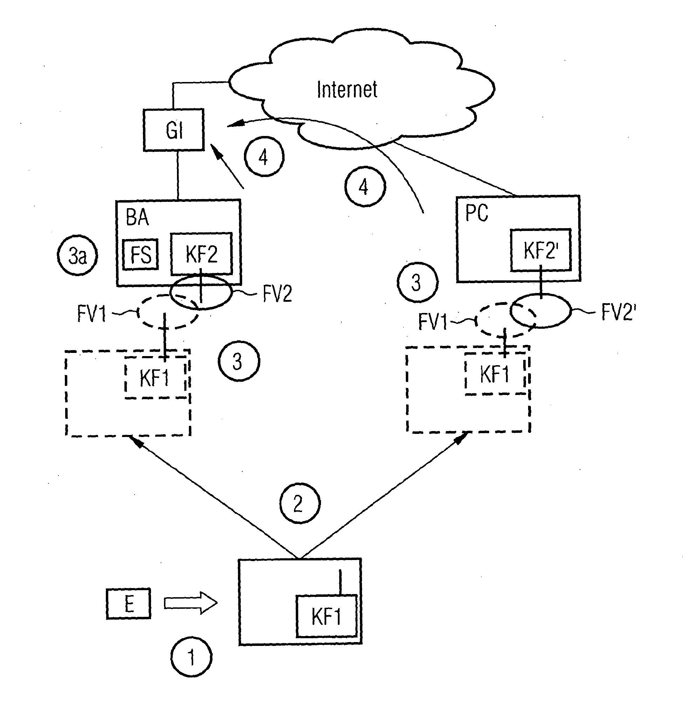

Weitere Einzelheiten sowie Vorteile der Erfindung werden anhand der einzigen Figur näher erläutert. Dabei zeigt diese Figur schematisch anhand der erfindungsgemäßen Anordnungen das erfindungsgemäße Verfahren.

Aus der Figur ist eine schematische Darstellung der die erfindungsgemäße Verfahrensweise anhand der sie durchführenden Einrichtungen zu erkennen.

Bei dem dargestellten Ausführungsbeispiel wird dabei von einem ersten Schritt 1 ausgegangen, bei dem eine Entität E einem Vordruck VD für eine Zahlungsabwicklung erstellt, was durch den blockartigen Pfeil schematisch dargestellt ist. Dieser Erstellung ist dabei eine Dienstleistung oder eine andere ein Schuldverhältnis begründende Handlung vorausgegangen, die dazu geführt hat, dass ein Kunde Schuldner geworden ist, der der Entität etwas schuldet und somit Empfänger dieses Vordrucks VD ist.

Wie zu erkennen ist, wird seitens der Entität E dem Vordruck VD eine erste Kurzstrecken-Funksende-Funkempfangseinrichtung KF1 in den Vordruck integriert. Nach Erhalt dieses Vordrucks durch den Kunden kann dieser nun eine Zahlungsabwicklung einleiten. Hierzu ist erfindungsgemäß von Vorteil, dass der Zahlungsvordruck einem gängigen Formular für solche Geschäfte entspricht, so dass er entweder die Möglichkeit hat, die Zahlung direkt bei einem Geldinstitut an einem Schalter oder aber durch Einwurf in einen dort vorgesehenen Briefkasten bewirkt oder aber wie in der Figur zu entnehmen, in einem zweiten Schritt 2 die Zahlung über einen Bankautomaten BA, der direkt mit einem Geldinstitut GI verbunden ist, oder einem PC, der über das Internet mit dem Geldinstitut GI verbunden ist, durchführen.

Der PC, der in der Regel ein Rechner zuhause beim Kunden sein wird, wird erfindungsgemäß hierzu eine zweite Kurzstrecken-Funksende-Funkempfangseinrichtung KF2' aufweisen, ebenso wird der Bankautomat eine zweite Kurzstrecken-Funksende-Funkempfangseinrichtung KF2 integrieren.

Bei dem dargestellten Ausführungsbeispiel ist zu entnehmen, dass in einem dritten Schritt 3 ins Nahfeld der mit dem Geldinstitut GI verbundenen Einrichtungen BA und PC gebracht werden muss, um eine Zahlungsabwicklung einzuleiten.

Das Nahfeld definiert sich dabei erfindungsgemäß durch den ersten Funkversorgungsbereich FV1, welches die erste Kurzstrecken-Funksende-Funkempfangseinrichtung KF1 zur Verfügung stellt. Hierbei ist es erfindungsgemäß von besonderem Vorteil, wenn dieser erste Funkversorgungsbereich FV1 durch Drosselung möglichst derart auf einen minimalen Radius reduziert wird, dass der Kunde mit dem Vordruck VD sehr dicht an die Einrichtung BA, PC herantreten muss, vorzugsweise diesen Vordruck VD sogar an eine hierfür vorgesehene Sensorfläche halten muss.

Es kann allerdings auch alternativ der erste Funkversorgungsbereich nur derart reduziert werden, dass ein Aufhalten des Kunden in unmittelbarer Nähe der Einrichtung BA, PC ausreicht, so dass eine Herausnahme des Vordrucks VD nicht nötig ist und beispielsweise ein Verlust oder ein Ausspionieren durch einen sich ebenfalls in der Nähe der Einrichtung BA, PC befindenden Dritten vermieden wird.

Beim Heranhalten des Vordrucks VD an einen Sensor kann allerdings vermieden werden, dass das bloße dichte Vorbeigehen an der Einrichtung BA, PC eine Zahlung auslöst bzw. möglicherweise durchführt, was dazu führen könnte, dass die Zahlung mehrfach erfolgt und somit das Konto mehrfach belastet wird bzw. der Kunde unzumutbaren Aufwand bei der Rückabwicklung hat.

Erfindungsgemäß hat man also einen besonderen Freiheitsgrad dahingehend, dass man durch die Auswahl des Radius des ersten Funkversorgungsbereichs FV1 an die jeweiligen Anforderungen des Kunden bzw. Geldinstituts Anpassungen vornehmen kann.

Dabei ist es alternativ oder ergänzend auch möglich, das Nahfeld durch einen zweiten Funkversorgungsbereich FV2, FV2' zu bestimmen, welcher durch die zweite Kurzstrecken-Funksende-Funkempfangseinrichtung KF2, KF2' bereitgestellt wird. So ist es beispielsweise denkbar, dass für Zahlungsabwicklungen an einem Bankomaten BA der zweite Funkversorgungsbereich FV2 besonders stark reduziert wird, so dass ein Halten des Vordrucks an einen Sensor erforderlich ist und das Zahlen durch alleiniges Vorbeigehen vermieden wird, während bei der Anwendung des erfindungsgemäßen Verfahrens im Heimbereich am heimischen PC der zweite Funkversorgungsbereich FV2' nicht so reduziert werden muss, da die Zahlung über heimischen PC im Gegensatz zur Zahlung über den Bankomaten BA nicht erfordert, dass die zweite Kurzstrecken-Funksende-Funkempfangseinrichtung KF2, KF2' ständig in Betrieb ist, sondern lediglich durch den Nutzer dann aktiviert werden kann und muss, wenn eine Zahlungsabwicklung gewünscht wird.

Gemäß dem Ausführungsbeispiel kann dabei beispielsweise durch das Bringen des Vordrucks VD in den Nahbereich die Zahlung lediglich nur dadurch ausgelöst werden, dass die zahlungsrelevanten Daten bei Eintritt in den Nahbereich an die Einrichtung BA, PC übermittelt werden und dort in eine vorgesehene Eingabemaske automatisch eingetragen werden, wobei das letztendliche Auslösen des Zahlvorgangs durch Nutzereingabe erfolgen kann, die beispielsweise am heimischen Rechner PC lediglich durch Betätigen der Eingabetaste erfolgt, während sie bei einem Bankomaten BA eventuell durch Scannen eines Fingerabdrucks des Kunden durch einen Fingerprintsensor FS ausgelöst wird, um sicherzustellen, dass die Zahlung auch wirklich durch die authentifizierte Person erfolgt. Hierbei erfolgt dann ein Vergleich der ermittelten biometrischen Daten mit einer im Geldinstitut GI gespeicherten Referenzgröße, wobei alternativ zum Fingerabdruck auch biometrische Daten, wie Sprachcharakteristika der Stimme, Irismerkmale oder aber Gesichtsmerkmale genutzt werden können.

Einer derartigen Bestätigung kann auch insbesondere am heimischen PC die Darstellung von auf dem Vordruck VD gespeicherten Daten erfolgen, die nicht zahlungsrelevant sind, aber beispielsweise Werbeinhalte oder allgemeine Informationen zum Zahlungsvorgang enthalten, deren Betrachtung quittiert werden muss und diese Quittierung als Bestätigung alternativ oder ergänzend zum Scannen von biometrischen Daten oder einer Nutzerangabe dient. Der Umfang dieser Inhalte ist dabei auf den auf der ersten Kurzstrecken-Funksende-Funkempfangseinrichtung verfügbaren Speicher begrenzt, welcher bei der bevorzugt verwendeten RFID-Chiptechnologie als eher gering einzuschätzen ist.

Nach Bestätigen erfolgt dann in einem vierten Schritt das Übertragen der zahlungsrelevanten Daten zu dem Geldinstitut GI, welches das Konto des Kunden belastet und die Zahlung an die Entität E durchführt.

## Patentansprüche

1. Verfahren zur Zahlungsabwicklung bei dem durch eine eine Rechnung stellende Entität
a) ein an einen Rechnungsschuldner zu übermittelnder Zahlungsvordruck erstellt wird, wobei
b) zur Abwicklung der Zahlung erforderliche Daten seitens der ausstellenden Entität auf den Vordruck aufgetragen werden,
c) dem Zahlungsvordruck eine erste Kurzstreckenfunksende/funkempfangseinrichtung mit einer Speichereinrichtung integriert wird,
d) die erforderlichen Daten auf der Speichereinrichtung derart dauerhaft gespeichert werden, dass sie bei Aufenthalt des Vordrucks im Kurzstreckenfunksende-/funkempfangsbereich einer mit einer zweiten Kurzstreckenfunksende/funkempfangseinrichtung ausgebildeten mit einem Geldinstitut kommunizierenden Einrichtung nach Detektion einer ersten initiierenden Aktion die gespeicherten Daten überträgt.

2. Verfahren nach Anspruch 1, **dadurch gekennzeichnet, dass** ein Eintritt in den Nahbereich der zweiten Kurzstreckenfunksende-/funkempfangseinrichtung die Initiierung bewirkt.

3. Verfahren nach Anspruch 1 oder 2, **dadurch gekennzeichnet, dass** eine Nutzereingabe an der mit dem Geldinstitut kommunizierenden Einrichtung und/oder am Vordruck die Initiierung bewirkt.

4. Verfahren nach einem der vorhergehenden Ansprüche, **dadurch gekennzeichnet, dass** nach Übertragung der Daten, diese automatisch in eine seitens der Einrichtung bereitgestellte Eingabemaske eingetragen werden.

5. Verfahren nach einem der vorhergehenden Ansprüche, **dadurch gekennzeichnet, dass**
a) biometrische Daten des Nutzers, insbesondere Fingerabdrücke, erfasst werden,
b) die Daten des Nutzers mit gespeicherten biometrischen Nutzerdaten verglichen werden,
c) bei einer Übereinstimmung mit den gespeicherten Daten die Zahlungsabwicklung zur Verarbeitung an das Geldinstitut weitergeleitet wird.

6. Verfahren nach einem der vorhergehenden Ansprüche, **dadurch gekennzeichnet, dass** als Einrichtung ein mit einem Bankkommunikationsnetz kommunizierender Bankautomat betrieben wird.

7. Verfahren nach einem der vorhergehenden Ansprüche, **dadurch gekennzeichnet, dass** als Einrichtung ein über ein Kommunikationsnetz, insbesondere dem Internet, verbundener Rechner betrieben wird.

8. Verfahren nach einem der vorhergehenden Ansprüche, **dadurch gekennzeichnet, dass** bei der zweiten initiierende Aktion weitere Daten seitens der Entität übertragen werden und sie als Bestätigung des Lesens dieser Daten realisiert wird.

9. Verfahren nach einem der vorhergehenden Ansprüche, **dadurch gekennzeichnet, dass** der Vordruck als von Geldinstituten akzeptiertes Formular erstellt wird.

10. Rechnungsvordruckerzeugungseinrichtung zur Zahlungsabwicklung **gekennzeichnet durch** Mittel zur Erzeugung eines Rechnungsvordrucks nach einem der vorhergehenden Ansprüche.

11. Rechnungsvordruck **gekennzeichnet durch** Mittel zur Durchführung des Verfahrens nach einem der vorhergehenden Ansprüche.

12. Rechnungsvordruck nach dem vorhergehenden Anspruch, **dadurch gekennzeichnet, dass** die erste Kurzstreckenfunksende/funkemfangseinrichtung als RFID ausgestaltet ist.

13. Rechnungsvordruck nach einem der Ansprüche 11 oder 12, **dadurch gekennzeichnet, dass** das die Kurzstreckenfunksende/funkempfangseinrichtung derart ausgestaltet ist, dass ihr Funkversorgungsbereich, insbesondere durch Begrenzung der Sendeleistung, das Nachfeld bestimmt.

14. Einrichtung zur Kommunikation mit einem Geldinstitut, insbesondere Bankomat, mit Mitteln zur Durchführung des Verfahrens nach einem der vorhergehenden Ansprüche.

15. Einrichtung zur Kommunikation nach dem vorhergehenden Anspruch, **dadurch gekennzeichnet, dass** die zweite Kurzstrecken-funksende-/funkempfangseinrichtung derart ausgestaltet ist, dass ihr Funkversorgungsbereich, insbesondere durch Begrenzung der Sendeleistung, das Nahfeld bestimmt.
